# EUROPEAN PATENT SPECIFICATION

(11) **EP 1 630 049 B1**
(45) Date of publication and mention of the grant of the patent: **03.09.2008**
(21) Application number: 05014878.2
(22) Date of filing: 08.07.2005
(51) Int. Cl.: B60R 21/20

(54) **Airbag unit and case of the unit**
Airbagenheit und Gehäuse für die Airbageinheit
Unité d'airbag et boîtier pour cette unité

(30) Priority: 25.08.2004 JP 2004245420
(43) Date of publication of application: 01.03.2006
(73) Proprietor: TAKATA CORPORATION, Minato-ku, Tokyo 106-8510 (JP)
(72) Inventor: Tsujimoto, Kei, Tokyo 106-8510 (JP); Matsui, Yoshitaka, Tokyo 106-8510 (JP); Nakazawa, Wataru, Tokyo 106-8510 (JP)
(74) Representative: Vossius & Partner

(56) References cited:
- EP-A- 1 203 703
- US-B1- 6 394 485
- PATENT ABSTRACTS OF JAPAN vol. 1999, no. 05, 31 May 1999 (1999-05-31) & JP 11 042994 A (TOYO TIRE & RUBBER CO LTD), 16 February 1999 (1999-02-16)

## Description

The present invention relates to airbag units used for protecting passengers and the like in vehicles, and relates to cases for accommodating airbags of the airbag units. In particular, the present invention relates to cases capable of absorbing shock by deforming in response to external force, and relates to airbag units including the cases.

Airbag units for passengers installed in instrument panels in vehicles each include a case, an airbag accommodated in the case, an inflator for expanding the airbag, and the like.

EP-A-1 203 703 relates to an airbag retainer having an upper retainer for housing an airbag and a lower retainer for holding an inflator. The upper retainer has a rectangular frame-like structure having sidewalls on the four sides thereof. The lower retainer has a bottom portion for accommodating the inflator. Sidewalls stand up on upper edges of the bottom portion, respectively, extending along the longitudinal direction of the bottom portion. The sidewalls of the lower retainer are located inside the sidewalls of the upper retainer, respectively, in a state such that the upper retainer and the lower retainer are assembled. In this state, the sidewalls of the lower retainer partly overlap the sidewalls of the upper retainer, respectively.

US-B1-6,394,485 relates to a passenger airbag device formed of a casing, an airbag, a lid, thick plates for connecting the lid to the casing, and an inflator. The thick plates are fixed to inner surfaces of side walls of the casing by spot welding. Hooks formed integrally with the thick plates project outside of the casing through holes formed in the side walls of the casing. The lid is secured to the casing by engagement between holes of the lid and the hooks. In the airbag device, the thick plates can be easily fixed to the casing to provide large reinforcement effect to the case.

A structure having a retractable sliding member fastened with rivets or bolts on a side wall of a case is disclosed in JP-A-11-42994 (Patent Document 1). That is to say, the sliding member has slits extending in the retracting direction, and the rivets or the bolts are fastened on the side wall of the case through the slits. When an object hits on an instrument panel, the sliding member retracts by sliding along the side wall of the case.

In the airbag unit disclosed in Japanese Unexamined Patent Application Publication No. 11-42994, the rivets or the bolts move relative to the slits when the sliding member retracts in response to the hit of the object. However, the collision energy of the object is not sufficiently absorbed during the retraction of the sliding member.

When no sliding member is provided, the collision energy is also not sufficiently absorbed due to high rigidity of the side wall of the case.

Accordingly, the object of the present invention is to provide a case of an airbag unit including a movable component retractable when an external force is applied, and capable of sufficiently absorbing the collision energy of an object applied to an instrument panel during the retraction of the movable component. Also, the object of the present invention is to provide an airbag unit including the case.

According to the present invention (Claim 1), a case of an airbag unit having a storage room for accommodating an airbag and an opening facing a vehicle cabin includes a case body functioning as a base end disposed opposite to the opening, and including a bottom section, a pair of first side walls, and a pair of second side walls; and a movable component disposed adjacent to the outer surface of a first one of the first side walls, and retractable toward the base end along the case body in response to an external force applied to the case. The case is characterized in that the first one of the first side walls includes a plurality of cut-off portions cut off from the end portion of the opening, and pillars extending from the vicinity of the base end along the cut-off portions.

The case according to Claim 2 is characterized in that, in Claim 1, the movable component is disposed at a position higher than the top ends of the pillars, and the movable component is fixed to the top ends of the pillars.

The case according to Claim 3 is characterized in that, in Claim 1 or 2, the pillars have stress concentrators for promoting buckling deformation.

The case according to Claim 4 is characterized in that, in any one of Claims 1 to 3, the pair of second side walls of the case body is linked to a second one of the first side walls via connecting portions, and are not linked to the bottom section of the case body; and each of the second side walls is deformable around the corresponding connecting portion so as to retract when an external force is applied in a direction toward the base end.

The case according to Claim 5 is characterized in that, in Claim 4, the pair of first side walls and the bottom section of the case body are composed of a bent metallic plate, and the second side walls are each composed of another metallic plate.

According to the present invention (Claim 6), an airbag unit includes the case according to any one of Claims 1 to 5, an airbag accommodated in the case, and an inflator for expanding the airbag.

In the case and the airbag unit including the case according to the present invention, the collision energy of an object applied to the instrument panel is absorbed by the deformation of the pillars of the case body during the retraction of the movable component in response to the external force generated when the object hits on the instrument panel.

According to the present invention, it is preferable that the movable component is disposed at a position higher than the top ends of the pillars, and that the movable component is fixed to the top ends of the pillars. Accordingly, buckling areas in the pillars during the retraction of the movable component can be expanded, and the absorption of collision energy can be enhanced.

According to the present invention, it is preferable that the pillars have stress concentrators for promoting buckling deformation. Accordingly, the pillars are surely buckled when the movable component retracts.

According to the present invention, the pair of second side walls of the case body may be linked to a second one of the first side walls via connecting portions, and not linked to the bottom section of the case body; and each of the second side walls may be deformable around the corresponding connecting portion so as to retract when an external force is applied in a direction toward the base end. When an external force is applied by an object to the first one of the first side walls of the case having the above-described structure, the second side walls retract while deforming the vicinity of the connecting portions. As a result, the collision energy is absorbed.

In this case, the pair of first side walls and the bottom section of the case body may be composed of a bent metallic plate, and the second side walls each may be composed of another metallic plate. Since these metallic plates are individually cut from blanks for the metallic plates such as strips by, for example, blanking, the yield is improved.

Embodiments of the present invention will now be described with reference to the drawings.

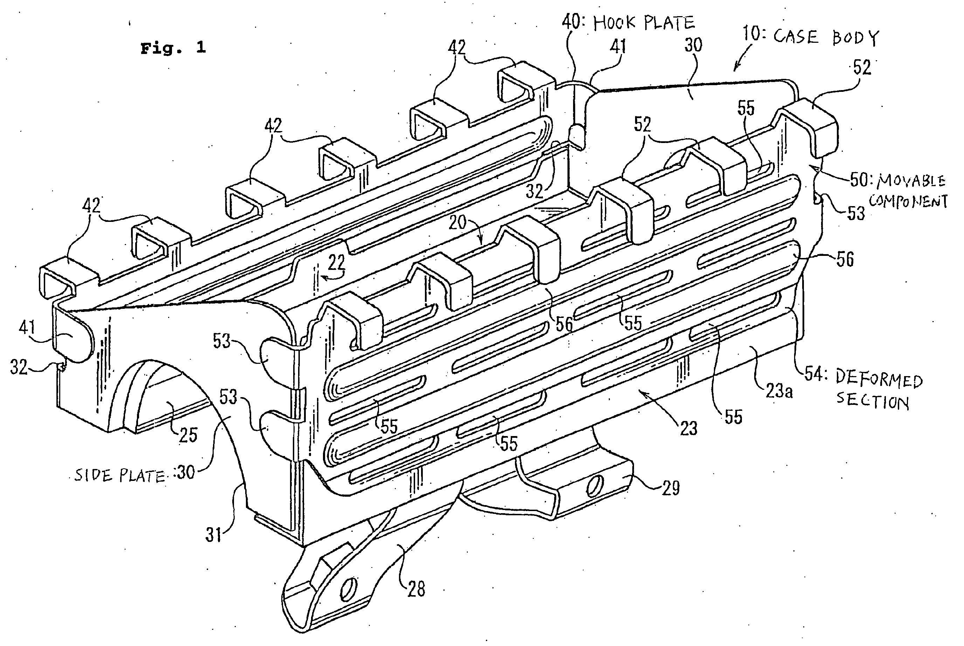

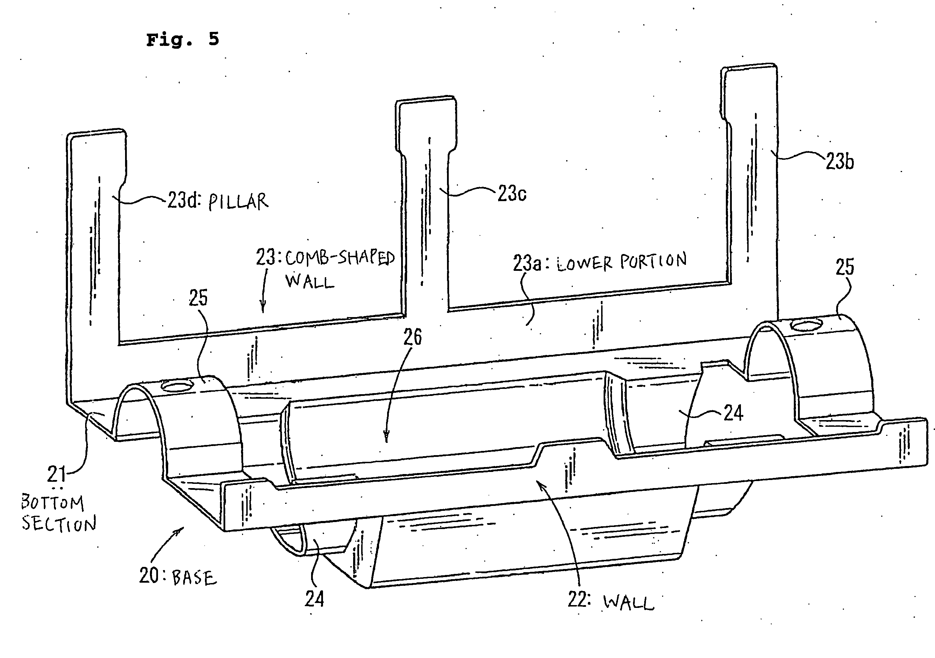

Fig. 1 is a perspective view of a case of an airbag unit for passengers according to an embodiment of the present invention;
Fig. 2 is a perspective view of a movable component of the case;
Fig. 3 is a cross-sectional view taken along line III - III in Fig. 2;
Fig. 4 is a perspective view of a case body;
Fig. 5 is a perspective view of a base of the case body viewed from the opposite side;
Fig. 6 is a longitudinal sectional view of the airbag unit;
Fig. 7 is a longitudinal sectional view of the airbag unit during the hit of an object;
Figs. 8(a) and 8(b) are side views illustrating the deformation of a side plate before and after the deformation, respectively, during the hit of the object; and
Figs. 9(a) to 9(c) are perspective views of pillars according to another embodiment of the present invention.
In these embodiments, the airbag unit is disposed in an instrument panel such that the case has an opening substantially at the top as shown in Fig. 5. Accordingly, the upper side of each figure, which is adjacent to a vehicle cabin, corresponds to the top of the airbag unit, whereas the lower side of each figure to the bottom of the airbag unit.

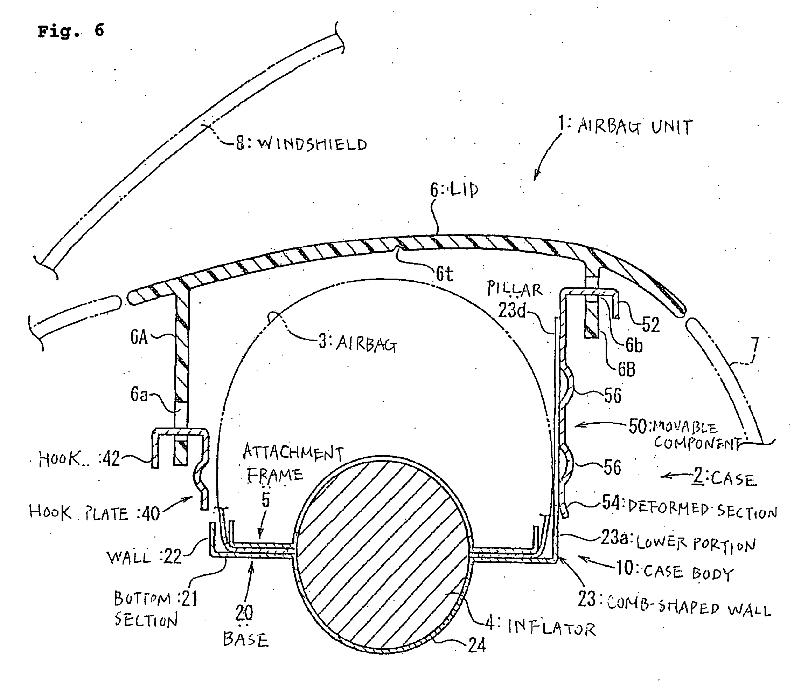

With reference to Fig. 6, an airbag unit 1 includes a case 2, an folded airbag 3 accommodated in the case 2, an inflator 4 for expanding the airbag 3, an attachment frame 5 for attaching the airbag 3 and the inflator 4 to the case 2, and a lid 6 covering the case 2.

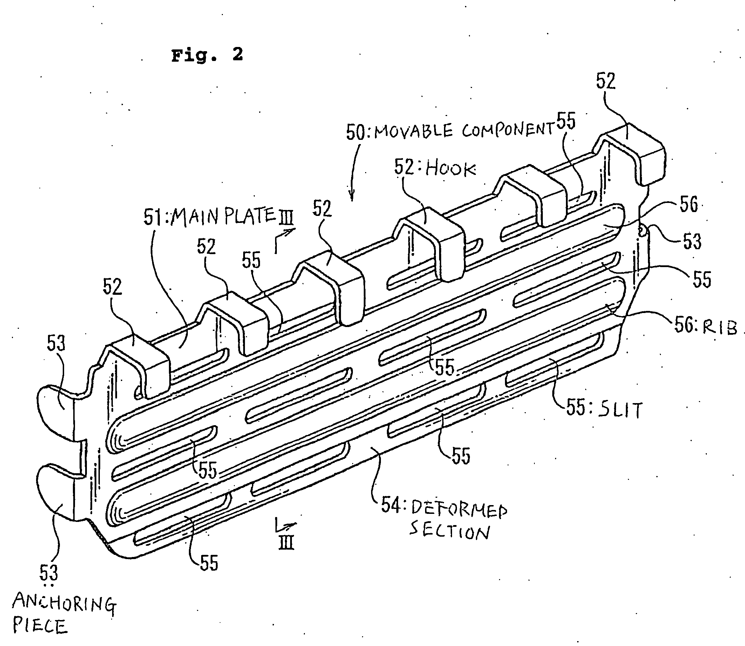

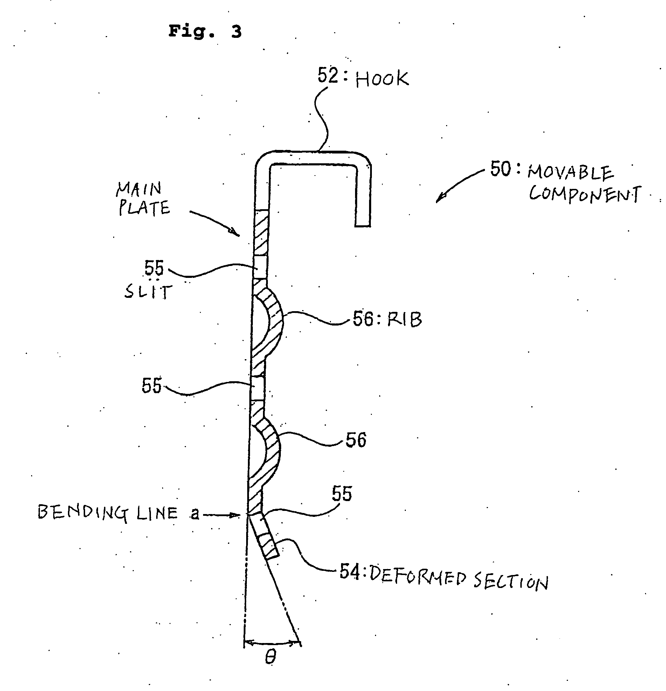

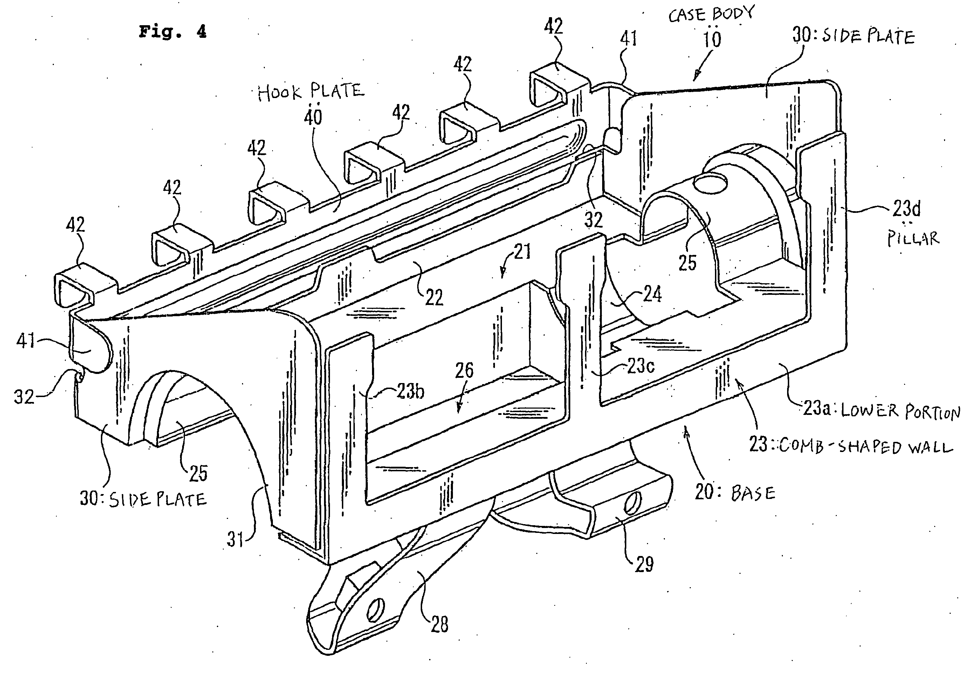

This case 2 includes a case body 10 and a movable component 50 attached to the case body 10 shown in Figs. 2 and 3. With reference to Figs. 4 and 6, this case body 10 includes a base 20 to which side plates 30 disposed at the left and the right and a hook plate 40 are attached.

With reference to Figs. 4 and 5, the base 20 includes a bottom section 21, a wall 22 extending upward from a long side of the bottom section 21 as one of first side walls, a comb-shaped wall 23 extending upward from the other long side of the bottom section 21 as one of the first side walls, semicylindrically concaved portions 24 and semicylindrically convexed portions 25 in the bottom section 21, and a concaved portion 26 hollowed around the center of the bottom section 21. Brackets 28 and 29 with which the airbag unit is attached to a vehicle are fixed to the lower surface of the base 20.

The airbag unit 1 is mounted in a vehicle such that the wall 22 is adjacent to the front of the vehicle and such that the comb-shaped wall 23 is adjacent to the back of the vehicle.

The comb-shaped wall 23 includes a lower portion 23a extending along the bottom section 21, pillars 23b and 23d extending upward from both sides of the lower portion 23a in the longitudinal direction, and a pillar 23c extending upward at the intermediate position between the pillars 23b and 23d. However, the number and the positions of the pillars are not limited to those described above. Spaces between the pillars are defined as cut-off portions formed by cutting the comb-shaped wall 23 off from the upper side.

The semicylindrical portions 24 and 25 have very similar radii, and are coaxially disposed. The inflator 4 is cylindrical, and is disposed such that the end portions are each fitted into a space between each pair of the semicylindrical portions 24 and 25.

As shown in Fig. 6, an end portion of a gas inlet of the airbag 3 and the inflator 4 are held between the attachment frame 5 and the base 20. The attachment frame 5 is fixed to the base 20 with bolts or rivets (not shown).

The side plates 30 disposed at the left and the right of the case body 10 are defined as second side walls of the case body 10. The left and the right correspond to the left and the right of the vehicle when the airbag unit is put in the instrument panel.

A semicircular cut-off portion 31 having a radius slightly larger than that of the semicylindrical portions 25 of the base 20 is provided at the lower end of each side plate 30. An anchoring piece 32 extending from one side of each side plate 30 is bent. These anchoring pieces 32 are overlapped on the outer surface of the wall 22 of the base 20 and fixed to the wall 22 by spot welding such that the side plates 30 are fixed to base 20. No anchoring piece is formed at the other side of each side plate 30, and the other side of each side plate 30 is not linked to the comb-shaped wall 23 (free). The side plates 30 are located outward from the bottom section 21 of the base 20.

As described above, the side plates 30 are linked to the base 20 only through the anchoring pieces 32 fixed to the wall 22, and are not linked to the comb-shaped wall 23. Moreover, the side plates 30 are located outward from the bottom section 21. Therefore, when a downward external force is applied to the side plates 30, the side plates 30 are deformed around the anchoring pieces 32 such that portions adjacent to the comb-shaped wall 23 are pressed downward.

The hook plate 40 extends along the wall 22 above the wall 22. Anchoring pieces 41 extending from both ends of the hook plate 40 in the longitudinal direction are bent. These anchoring pieces 41 are fixed to the side plates 30 by spot welding such that the hook plate 40 is fixed to the side plates 30.

A plurality of hooks 42 protrude from the upper end of the hook plate 40 in the longitudinal direction with a predetermined spacing therebetween. The hooks 42 extend slightly upward from the hook plate 40, then bend outward from the case body 10, and subsequently bend downward.

With reference to Fig. 2, the movable component 50 includes an approximately rectangular main plate 51, a plurality of hooks 52 protruding from the upper end of the main plate 51, nail-shaped anchoring pieces 53 bent from the left and the right of the main plate 51 at approximately right angles, a deformed section 54 formed at the lower portion of the main plate 51, slits 55 and ribs 56 formed on the main plate 51. The slits 55 and the ribs 56 extend parallel to the long sides of the main plate 51. However, the shapes of the slits and ribs are not limited to those described above.

The hooks 52 have similar profiles to the hooks 42, and are disposed on the upper end of the main plate 51 in the longitudinal direction with a spacing therebetween.

In this embodiment, two anchoring pieces 53 are disposed at each side of the main plate 51. However, the number is not limited to this.

The deformed section 54 is formed by bending a lower end portion of the main plate 51 such that the lower end portion is remote from the comb-shaped wall 23. In this embodiment, the lower end portion of the main plate 51 is bent by an angle θ along a bending line a (see Fig. 3) parallel to the lower side of the main plate 51 so as to form the deformed section 54. This angle θ is preferably 90° or less. The deformed section 54 may be formed by curving the lower end portion of the main plate 51.

The movable component 50 is disposed along the outer surface of the comb-shaped wall 23 of the base 20, and also the anchoring pieces 53 are disposed along the outer surfaces of the side plates 30. The anchoring pieces 53 are then fixed to the side plates 30 by spot welding. In addition, the main plate 51 is fixed to upper portions of the pillars 23b, 23c, and 23d of the comb-shaped wall 23 by spot welding.

As shown in Fig. 6, the lid 6 is attached to the case 2 so as to cover the folded airbag 3 accommodated in the case 2. A leg 6A adjacent to the front of the vehicle and a leg 6B adjacent to the back of the vehicle protrude from the back side of the lid 6, and the hooks 42 and 52 are caught in holes 6a and 6b formed in the legs 6A and 6B, respectively. The lid 6 includes a tear line 6t to be torn when the airbag 3 is expanded by the activation of the inflator 4.

The airbag unit 1 having the above-described structure is installed such that the lid 6 is flush with an instrument panel 7, and the brackets 28 and 29 are fixed to vehicle members (not shown) by bolts and the like.

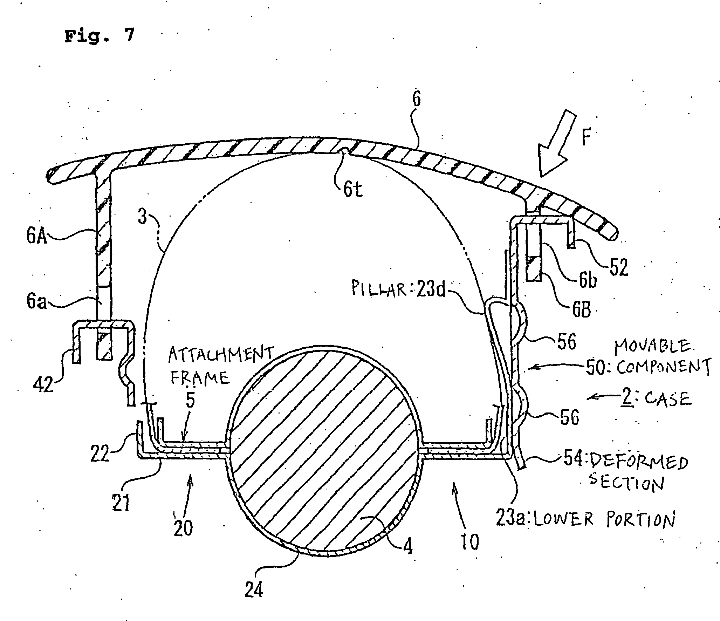

When an external force is applied to the lid 6 of the airbag unit 1 in the vicinity of the movable component 50 due to the hit of an object indicated by an arrow F shown in Fig. 7, the movable component 50 is pushed by this external force and retracts (moves downward in this embodiment). At this time, the pillars 23b, 23c, and 23d of the comb-shaped wall 23 are deformed so as to be buckled, and absorb the collision energy. In this embodiment, the movable component 50 is fixed to the upper portions of the pillars 23b to 23d. Accordingly, buckling areas in the pillars are large, and a large amount of the collision energy is absorbed.

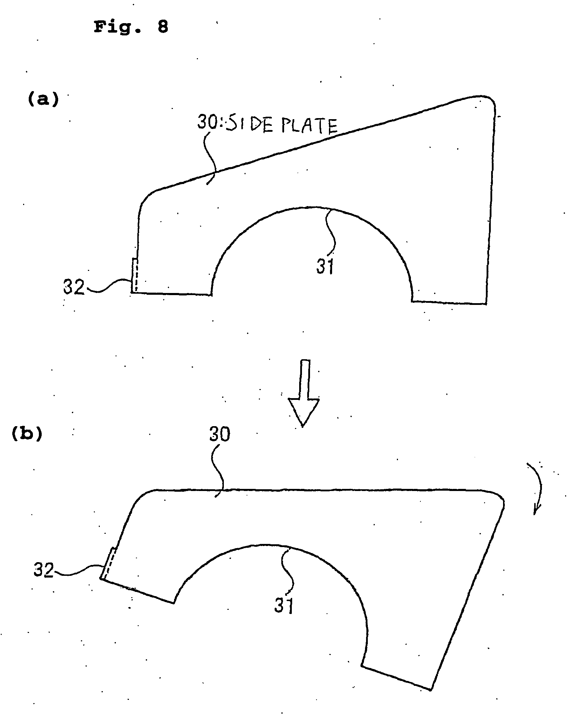

Moreover, as shown in Figs. 8(a) and 8(b), the side plates 30 are deformed around the bases of the anchoring pieces 32 such that the portions adjacent to the comb-shaped wall 23 are pressed downward. The collision energy can also be absorbed by this deformation of the side plates 30.

Even though the movable component 50 moves downward, the lower portion 23a of the comb-shaped wall 23 does not move downward due to the firm support of the bottom section 21. As a result, the movable component 50 moves downward while sliding on the outer surface of the lower portion 23a.

The deformed section 54 is formed in the lower end portion of the movable component 50 such that the deformed section 54 is remote from the comb-shaped wall 23. Accordingly, the movable component 50 is not caught in the upper end of the lower portion 23a, and can smoothly move downward. As a result, the pillars 23b to 23d and the side plates 30 can be successfully deformed, and shock occurring when an object hits on the lid in the vicinity of the movable component 50 or on the instrument panel can be sufficiently absorbed.

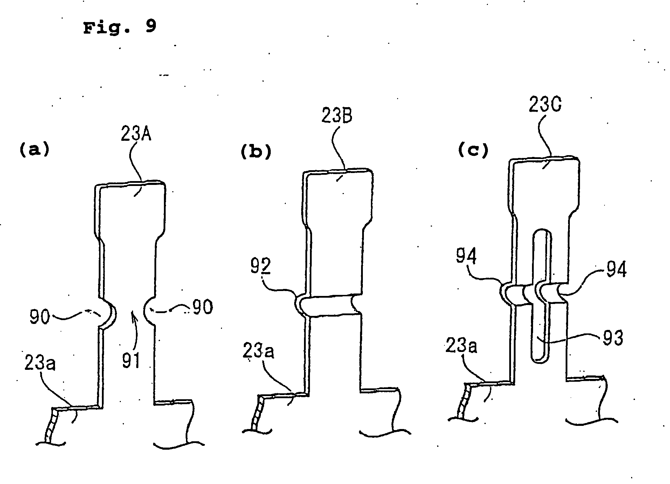

According to the present invention, stress concentrators may be provided in pillars as shown in Figs. 9(a) to 9(c) so as to ensure predetermined absorption of collision energy by the buckling of the pillars 23b to 23d starting from a predetermined position.

Cut-off portions 90 functioning as stress concentrators 91 are formed at both sides of a pillar 23A shown in Fig. 9(a). A convexed stress concentrator 92 is formed in a pillar 23B shown in Fig. 9(b). Convexed stress concentrators 94 are formed at both sides of a slot 93 formed in a pillar 23C shown in Fig. 9(c) along the longitudinal direction.

In the above-described embodiments, the case body 10 is formed of the base 20 and the side plates 30 that are composed of separate metallic plates. Since these metallic plates are individually cut from strips of blanks, the materials are less wasted compared with a case where a component including the base 20 and the side plates 30 integrated together is cut out. Furthermore, since the hook plate 40 and the base 20 are separate components, the relative height between the hook plate 40 and the wall 22 can also be adjusted.

The above-described embodiments are examples of the present invention, and embodiments other than those shown in the drawings are possible. For example, the comb-shaped wall 23 may be formed only of pillars without the lower portion 23a.

## Claims

1. A case (2) of an airbag unit (1) having a storage room for accommodating an airbag (3) and an opening facing a vehicle, cabin, comprising:
a case body (10) functioning as a base end disposed opposite to the opening, and including a bottom section (21), a pair of first side walls (22, 23), and a pair of second side walls (30); and
a movable component (50) disposed adjacent to the outer surface of a first one of the first side walls, and retractable toward the base end along the case body in response to an external force applied to the case, wherein
the first one of the first side walls (22, 23) includes a plurality of cut-off portions cut off from the end portion of the opening, and pillars (23b, 23c, 23d, 23A, 23B, 23C) extending from the vicinity of the base end along the cut-off portions.

2. The case of the airbag unit according to Claim 1, wherein
the movable component (50) is disposed at a position higher than the top ends of the pillars; and
the movable component (50) is fixed to the top ends of the pillars.

3. The case of the airbag unit according to Claim 1 or 2, wherein
the pillars have stress concentrators for promoting buckling deformation.

4. The case of the airbag unit according to any one of Claims 1 to 3, wherein
the pair of second side walls (30) of the case body (10) is linked to a second one of the first side walls via connecting portions, and are not linked to the bottom section (21) of the case body (10); and
each of the second side walls (30) is deformable around the corresponding connecting portion so as to retract when an external force is applied in a direction toward the base end.

5. The case of the airbag unit according to Claim 4, wherein
the pair of first side walls (22, 23) and the bottom section (21) of the case body (10) comprise a bent metallic plate; and
the second side walls (30) each comprise another metallic plate.

6. An airbag unit comprising:
the case (2) according to any one of Claims 1 to 5;
an airbag (3) accommodated in the case (2); and
an inflator (4) for expanding the airbag.

## Patentansprüche

1. Gehäuse (2) einer Airbageinheit (1) mit einem Aufbewahrungsbereich zum Aufnehmen eines Airbags (3) und einer Öffnung die zur Fahrzeugkabine zeigt, mit
einem Gehäusekörper (10), der als gegenüber der Öffnung angeordnetes Basisendstück fungiert und einen Bodenabschnitt (21), ein Paar erste Seitenwände (22, 23) und ein Paar zweite Seitenwände (30) aufweist; und
einer bewegbaren Komponente (50), die benachbart zur Außenfläche einer ersten Seitenwand der ersten Seitenwände angeordnet und in Reaktion auf eine externe, auf das Gehäuse ausgeübte Kraft zum Basisendstück entlang des Gehäusekörpers zurückbewegbar ist, wobei
die erste Seitenwand der ersten Seitenwände (22, 23) mehrere Abschnitte, die von dem Endbereich der Öffnung getrennt sind, und Säulen (23b, 23c, 23d, 23A, 23B, 23C) aufweist, die sich ausgehend von der Nähe des Basisendstücks entlang den Abschnitten erstrecken.

2. Gehäuse der Airbageinheit nach Anspruch 1, wobei
die bewegbare Komponente (50) in einer höheren Position als die oberen Enden der Säulen angeordnet ist; und
die bewegbare Komponente (50) an den oberen Enden der Säulen befestigt ist.

3. Gehäuse der Airbageinheit nach Anspruch 1 oder 2, wobei
die Säulen Sollknickstellen aufweisen, um die Verformung durch Knicken zu begünstigen.

4. Gehäuse der Airbageinheit nach einem der Ansprüche 1 bis 3, wobei
das Paar der zweiten Seitenwände (30) des Gehäusekörpers (10) mit einer zweiten Seitenwand der ersten Seitenwände über Verbindungselemente verbunden ist und mit dem Bodenabschnitt (21) des Gehäusekörpers (10) nicht verbunden ist; und
jede der zweiten Seitenwände (30) um das entsprechende Verbindungselement herum verformbar ist und einklappt, wenn eine externe Kraft in Richtung des Basisendstücks einwirkt.

5. Gehäuse der Airbageinheit nach Anspruch 4, wobei
das Paar der ersten Seitenwände (22, 23) und der Bodenabschnitt (21) des Gehäusekörpers (10) eine gebogene Metallplatte aufweist; und
die zweiten Seitenwände (30) jeweils eine andere Metallplatte aufweisen.

6. Eine Airbageinheit mit:
dem Gehäuse (2) nach einem der Ansprüche 1 bis 5;
einem in dem Gehäuse (2) aufgenommenen Airbag (3); und
einem Gasgenerator (4) zum Aufblasen des Airbags.

## Revendications

1. Boîtier (2) d'une unité d'airbag (1) ayant un espace de stockage pour recevoir un airbag (3) et une ouverture visant une cabine de véhicule comprenant :
un corps de boîtier (10) fonctionnant comme extrémité de base disposé en face de l'ouverture, et contenant une section de fond (21), une paire de premières parois latérales (22, 23), et une paire de secondes parois latérales (30) ; et
un composant mobile (50) disposé adjacent de la surface extérieure d'une première des premières parois latérales, et rétractable en direction de l'extrémité de base le long du corps de boîtier en réponse d'une force externe apportée sur le boîtier, dans lequel
la première des premières parois latérales (22, 23) contient une pluralité de portions séparées séparées de la portion d'extrémité de l'ouverture, et des piliers (23b, 23c, 23d, 23A, 23B, 23C) s'étendant de la proximité de l'extrémité de base le long des portions séparées.

2. Boîtier de l'unité d'airbag selon la revendication 1, dans lequel
le composant mobile (50) est disposé à une position plus haut que les extrémités de tête des piliers ; et
le composant mobile (50) est fixé aux extrémités de tête des piliers.

3. Boîtier de l'unité d'airbag selon la revendication 1 ou 2, dans lequel
les piliers ont des concentrateurs de stress pour pousser la déformation.

4. Boîtier de l'unité d'airbag selon l'une quelconque des revendications 1 à 3, dans lequel
la paire de secondes parois latérales (30) du corps de boîtier (10) est liée à une seconde des premières parois latérales par des portions de liaison, et ne sont pas liées à la section de fond (21) du corps de boîtier (10) ; et
chacune des secondes parois latérales (30) est déformable autour la portion de liaison correspondante afin de plier quand une force externe est appliquée dans une direction vers l'extrémité de base.

5. Boîtier de l'unité d'airbag selon la revendication 4, dans lequel
la paire de premières parois latérales (22, 23) et la section de fond (21) du corps de boîtier (10) comprennent une tôle métallique courbée ; et
les secondes parois latérales (30) chacune comprennent une autre tôle métallique.

6. Unité d'airbag comprenant :
le boîtier (2) selon l'une quelconque des revendication 1 à 5 ;
un airbag (3) reçu dans le boîtier (2) ; et
un gazogène (4) pour étendre l'airbag.
